(19) Europäisches Patentamt

European Patent Office

Office européen des brevets

(11) Veröffentlichungsnummer: **0 379 498 B1**

(12) **EUROPÄISCHE PATENTSCHRIFT**

(45) Veröffentlichungstag der Patentschrift:
28.08.91 Patentblatt 91/35

(51) Int. Cl.$^5$: **F01P 7/04**

(21) Anmeldenummer: 88907300.3

(22) Anmeldetag: 25.08.88

(86) Internationale Anmeldenummer:
PCT/EP88/00762

(87) Internationale Veröffentlichungsnummer:
WO 89/02027 09.03.89 Gazette 89/06

(54) **TEMPERATURGEREGELTE LÜFTERKUPPLUNG.**

(30) Priorität: 25.08.87 DE 3728330

(43) Veröffentlichungstag der Anmeldung:
01.08.90 Patentblatt 90/31

(45) Bekanntmachung des Hinweises auf die
Patenterteilung:
28.08.91 Patentblatt 91/35

(84) Benannte Vertragsstaaten:
AT BE CH DE FR GB IT LI LU NL SE

(56) Entgegenhaltungen:
EP-A- 0 106 581
DE-A- 3 420 277
DE-C- 3 140 195
US-A- 4 493 293

(73) Patentinhaber: TEWIG GmbH Technische
Entwicklungs-Gesellschaft
Neumarkter Strasse 33
W-8432 Beilngries (DE)

(72) Erfinder: FRIEDRICHS, K, Gerd
Neumarkter Str. 33
W-8432 Beilngries (DE)

(74) Vertreter: Heim, Hans-Karl, Dipl.-Ing. et al
c/o Weber & Helm Hofbrunnstrasse 36
W-8000 München 71 (DE)

## Beschreibung

Die Erfindung betrifft eine Lüfter-Flüssigkeitskupplung für einen wassergekühlten Motor, deren treibende Welle als Hohlwelle zur Verbindung mit dem Kühlflüssigkeitskreislauf des Motors ausgebildet ist, und mit einer zur Kühlung der Flüssigkeitskupplung dienend Kühlvorrichtung, welche über radiale Hohlwellenöffnungen zum Austausch von Kühlflüssigkeit mit dem Hohlwellen-Inneren verbunden ist.

Es ist bekannt, die Temperatur von Verbrennungsmotoren und Elektromotoren mit Hilfe einer Kühl-Flüssigkeit zu regeln. Bei wassergekühlten Verbrennungsmotoren ist ein Kühlkreislauf vorgesehen, in welchem die Kühlflüssigkeit ständig umgepumpt wird. Ferner wird über einen Lüfter von außen Kühlluft angesaugt und über die abzukühlenden Oberflächen geleitet.

Bei Verbrennungsmotoren werden das Lüfterrad und das Pumpenrad der Kühlmittelpumpe häufig über eine gemeinsame Welle angetrieben. Zur Drehzahlregelung des Lüfterrades ist es hierbei bekannt, eine temperaturabhängige Flüssigkeitskupplung vorzusehen. Die Regelung erfolgt in Abhängigkeit von der Außentemperatur bzw. der angesaugten Kühlluft. Da dem Regelvorgang eine motorunabhängige Regelgröße zugrundegelegt wird, ist es nicht uneingeschränkt möglich, die Kühlung an die jeweiligen Betriebszustände und an die jeweiligen Temperaturen des Motors in der gewünschten und erforderlichen Weise anzupassen.

Eine gattungsgemäße Flüssigkeitskupplung ist aus der DE-3140195 bekannt. Die Kupplung wird in Abhängigkeit von der Temperatur des Kühlwassers geregelt, welches über die als Hohlwelle ausgebildete Lüfterradwelle an ein Thermoelement in der Nähe der Kupplung geleitet wird. Zur Kühlung befindet sich in der Arbeitskammer der Kupplung eine Kühlschlange, die über Radialbohrungen in der Hohlwelle mit dem Kühlwasser versorgt wird. Konstruktionsbedingt ist diese Flüssigkeitskupplung daher relativ groß und sie erfordert ferner eine relativ große Menge an Arbeitsflüssigkeit. Der relativ großen Menge an Arbeitsflüssigkeit steht eine relativ kleine Kühloberfläche gegenüber. Da ein zusätzliches Kühlelement in der Arbeitskammer vorgesehen ist, ist der Einsatzbereich aus Platzgründen begrenzt. Außerdem ist systembedingt ein relativ großer Montage-, Wartungs- und Materialaufwand erforderlich.

Eine weitere temperaturgesteuerte Flüssigkeitskupplung für einen Ventilator einer Brennkraftmaschine ist aus der DE-3420277 bekannt. Die Regelung erfolgt mit Hilfe eines Bi-Metallelementes, welches der vom Kühler abgegebenen Luft ausgesetzt ist. Hierzu ist es außen auf das Kupplungsgehäuse aufgesetzt.

Der Erfindung liegt die **Aufgabe** zugrunde, eine Flüssigkeitskupplung der eingangs genannten Art anzugeben, mit welcher die Kühlung der Kupplung bei gleichzeitiger kompakter und montagefreundlicher Ausgestaltung verbessert wird.

Diese Aufgabe wird gemäß dem kennzeichnenden Teil des Anspruchs 1 gelöst.

Die Erfindung hat den Vorteil, daß die Drehzahl des Lüfterrades in Abhängigkeit von der Temperatur der Kühlflüssigkeit erfolgt. Auf diese Weise ist immer gewährleistet, daß die Luftkühlung unmittelbar auf die Motortemperatur hin vorgenommen wird. Ein weiterer Vorteil ist darin zu sehen, daß die Kupplung zusammen mit den gesamten Regeleinrichtungen als kompakte Einheit ausgebildet werden kann, die allein über die Hohlwelle mit dem übrigen Motorblock verbunden ist. Somit ist nur eine einzige Schnittstelle mit dem Motorblock vorhanden. Die Montage und ggf. ein Ersatz der Kupplung können durch einfachen axialen Aus-/Einbau erfolgen.

Insgesamt liegt der Erfindung der Gedanke zugrunde, in Abhängigkeit von der Kühlflüssigkeitstemperatur des Motors eine Schlupfregelung der Flüssigkeitskupplung durchzuführen und dabei eine kompakte, montagefreundliche konstruktive Einheit zu schaffen.

Eine bevorzugte Weiterbildung der Erfindung besteht darin, daß der Stromregler eine Ventilscheibe am freien Ende des Stößels aufweist, welche mit den Eintrittsöffnungen der Flüssigkeitskupplung in Eingriff steht. Durch eine Hubbewegung des Stößels werden die Rücklauföffnungen freigegeben bzw. gedrosselt oder abgesperrt. Die Ventilscheibe kann mit geringem konstruktiven Aufwand bei kleinem Materialaufwand realisiert werden.

Zur Sicherheit beim Ausfall des Temperaturreglers ist die Ventilscheibe bzw. der Stößel entgegen der Schließrichtung mit einer Feder belastet. Sollte der Temperaturregler während des Betriebes ausfallen, so wird das Ventil in eine sichere Position gebracht, in welcher der Betriebsmittelkreislauf der Flüssigkeitskupplung nicht unterbrochen ist und die Funktionsfähigkeit der Kupplung gewährleistet ist.

Es erweist sich als besonders vorteilhaft, daß das Pumpenrad der Flüssigkeitskupplung zumindest teilweise als Hohlkörper ausgebildet ist, und daß dieser zum Austausch von Kühlflüssigkeit mit der Hohlwelle verbunden ist. Durch diese Maßnahme kann das Pumpenrad und die Flüssigkeitskupplung auf einfache Weise gekühlt werden. Über die Hohlwelle gelangt die Kühlflüssigkeit des Motors in das Pumpenrad und führt dort einen Wärmeaustausch mit der Betriebsflüssigkeit der Kupplung durch. Es wird somit ein unzulässiges Erhitzen oder eine Dampfbildung in der Betriebsflüssigkeit verhindert, ohne daß eine zusätzliche externe Kühlvorrichtung vorhanden zu sein braucht.

Eine besonders einfache Herstellung und Montage des Pumpenrades ist dadurch möglich, daß zwei Halbschalen unter Bildung des Hohlraums zusammengefügt werden. Es erweist sich hierzu als besonders zweckmäßig, daß die beiden Halbschalen jeweils als Blechteil ausgebildet sind.

Die Zirkulation der Kühlflüssigkeit in der treibenden Hohlwelle wird dadurch verbessert, daß die Hohlwelle mit Führungskanälen versehen ist. Eine besonders einfache Ausgestaltung besteht darin, daß ein Rohrstück mit radialen Abstandshaltern zur Bildung eines Ringraumes in die Hohlwelle eingesetzt ist.

Die Führung der Flüssigkeit in axialer Richtung erfolgt bevorzugt dadurch, daß die Abstandshalter als in Achsrichtung geschlossene Leitflächen zur Bildung von axialen Kanälen im Ringraum ausgebildet sind.

Um die Zirkulation der Kühlflüssigkeit im Pumpenrad zu unterstützen und den Austausch zwischen dem Pumpenrad und der Hohlwelle zu verstärken, ist es zweckmäßig, daß die Hohlwelle über ihren Umfang verteilt Hohlwellen-Öffnungen zur Verbindung mit dem Hohlraum des Pumpenrades aufweist und daß das Rohrstück endseitig mit einem Verteiler zur Trennung von hin- und rückfließender Kühlflüssigkeit versehen ist.

Der Verteiler wird bevorzugt dadurch gebildet, daß das Rohrstück mit einer im Rohrstückmantel angebrachten Rohrstücköffnung versehen ist, und daß auf der Rohrstücköffnung ein Rohrstück-Abzweig angeordnet ist, der zumindest mit einer Hohlwellen-Öffnung verbunden ist. Über den Abzweig kann Kühlflüssigkeit in das Pumpenrad gelangen, ohne daß es sich mit Kühlflüssigkeit vermischt, die in den Ringraum zurückfließt.

Eine gute Verteilung der Flüssigkeit auf die einzelnen axialen Kanäle wird dadurch sichergestellt, daß im Bereich der Hohlwellen-Öffnungen und in Flußrichtung hinter dem Verteiler ein im wesentlichen über den ganzen Umfang ununterbrochener Ringraum vorhanden ist. Der Anordnung des Verteilers liegt der Gedanke zugrunde, einen in Umfangsrichtung und/oder axialer Richtung begrenzten Bereich der Hohlwellen-Öffnungen mit der einströmenden Kühlflüssigkeit zu beaufschlagen und den verbleibenden Bereich für den Rückfluß der Kühlflüssigkeit freizuhalten. Außerdem wird durch den Abzweig sichergestellt, daß der Temperaturregler nur mit Kühlflüssigkeit beaufschlagt wird, die aus dem Kühlkreislauf stammt, während Kühlflüssigkeit, die aus dem Pumpenrad zurückfließt, am Temperaturregler vorbeigeleitet wird. Somit wird verhindert, daß der Temperaturregler auf die Temperatur der aus dem Pumpenrad zurückfließenden Kühlflüssigkeit anspricht.

Die Regelung der Flüssigkeitskupplung kann vorteilhaft dadurch weitergebildet werden, daß der Temperaturregler drehzahl- und lastabhängig ist. Dies hat den Vorteil, daß die Drehzahl des Lüfters bei gleicher Temperatur beispielsweise im Hochlast- und im unteren Lastbereich den unterschiedlichen Erfordernissen entsprechend verschieden sein kann.

Die Ansprechzeit der Flüssigkeitskupplung wird dadurch weiter verkürzt, daß das Pumpenrad mit axial verlaufenden Durchtrittsöffnungen versehen ist, so daß sich die Betriebsflüssigkeit schneller im Pumpenraum verteilen kann. Bevorzugt sind die Durchtrittsöffnungen im Anschluß an die Eintrittsöffnungen der Flüssigkeitskupplung angeordnet.

Um die Auswirkungen von Axial- und/oder Radialspiel bzw. von entsprechenden Montage- und Fertigungstoleranzen in den radialen Spalten zwischen Pumpen- und Turbinenrad zu verringern, kann es zweckmäßig sein, daß die einander zugekehrten Oberflächen dieser beiden Teile mit in Umfangsrichtung verlaufenden ineinandergreifenden Einkerbungen und entsprechenden Gegenstücken versehen sind, die einen dreieckförmigen oder rechteckigen Querschnitt aufweisen.

Bei einer Flüssigkeitskupplung mit einer mit der treibenden Hohlwelle verbundenen weiteren Hohlwelle, die als Antriebswelle für ein Pumpenrad einer Kühlflüssigkeitspumpe im Kühlflüssigkeitskreislauf des Motors ausgebildet ist, wobei die weitere Hohlwelle mindestens zwei in axialer Richtung verlaufende Kanäle aufweist, von denen der eine eine Öffnung auf der Saugseite und der andere eine Öffnung auf der Druckseite des Kühlmittel-Pumpenrades aufweist, ist es zur Regelung des Kühlmittelzu- oder -abflusses vorteilhaft, daß die weitere Hohlwelle mit einer von außen betätigbaren Drossel versehen ist. Eine einfache Realisierung besteht darin, daß die Drossel als Drosselklappe ausgebildet ist, die vor einer am Wellenende angeordneten und in axialer Richtung ausgerichteten Öffnung der weiteren Hohlwelle angeordnet ist.
Alternativ dazu kann es auch zweckmäßig sein, daß die Drossel als Schieber auf der Hohlwelle für eine radial verlaufende Öffnung angeordnet ist.

Die Zirkulation des Kühlmittels in der Hohlwelle der Flüssigkeitskupplung und der Kühlflüssigkeitspumpe wird dadurch auf einfache Weise aufrechterhalten, daß die weitere Hohlwelle mindestens zwei in axialer Richtung verlaufende Kanäle aufweist, daß der eine Kanal eine Öffnung auf der Saugseite und der andere Kanal eine Öffnung auf der Druckseite des Kühlmittel-Pumpenrades aufweist.

Nachfolgend wird die Erfindung anhand von zwei in der Zeichnung dargestellten Ausführungsbeispielen weiter erläutert.

| Fig. 1 und Fig. 2 | zeigen schematisch einen Querschnitt durch jeweils eine Flüssigkeitskupplung. |
|---|---|
| Fig. 3 | zeigt schematisch eine Aufsicht auf eine Einzelheit der Flüssigkeitskupplung gemäß Fig. 1 und Fig. 2. |
| Fig. 4 | zeigt schematisch eine Lüfteranordnung zur Motorkühlung und |

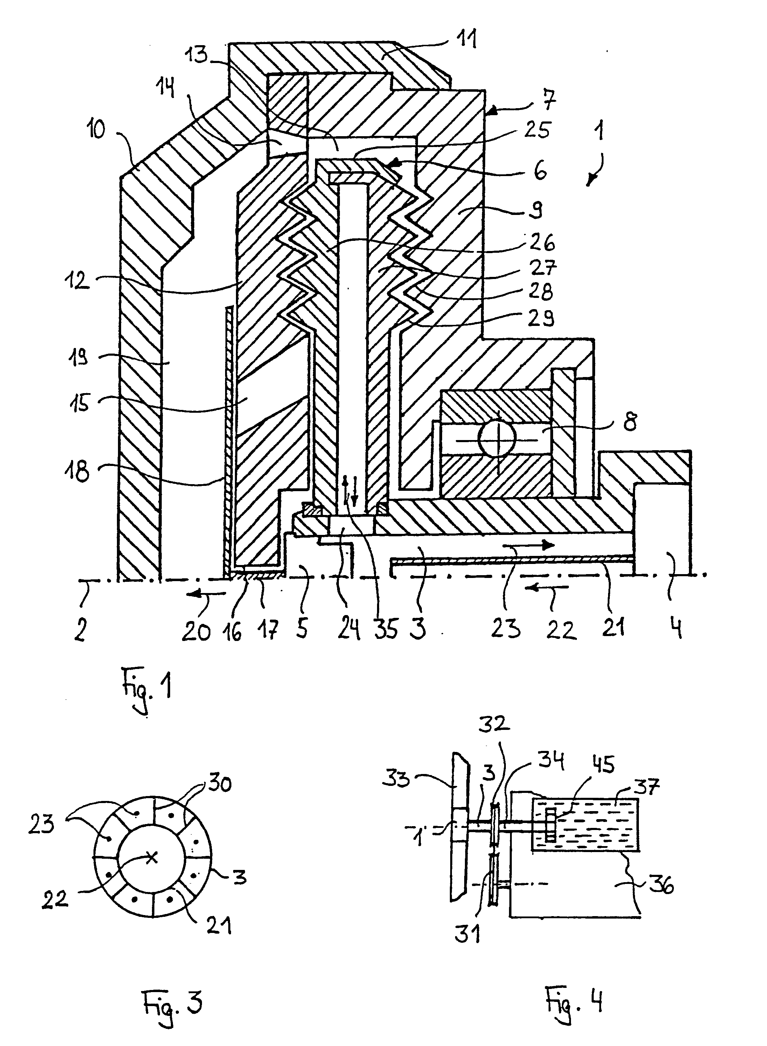

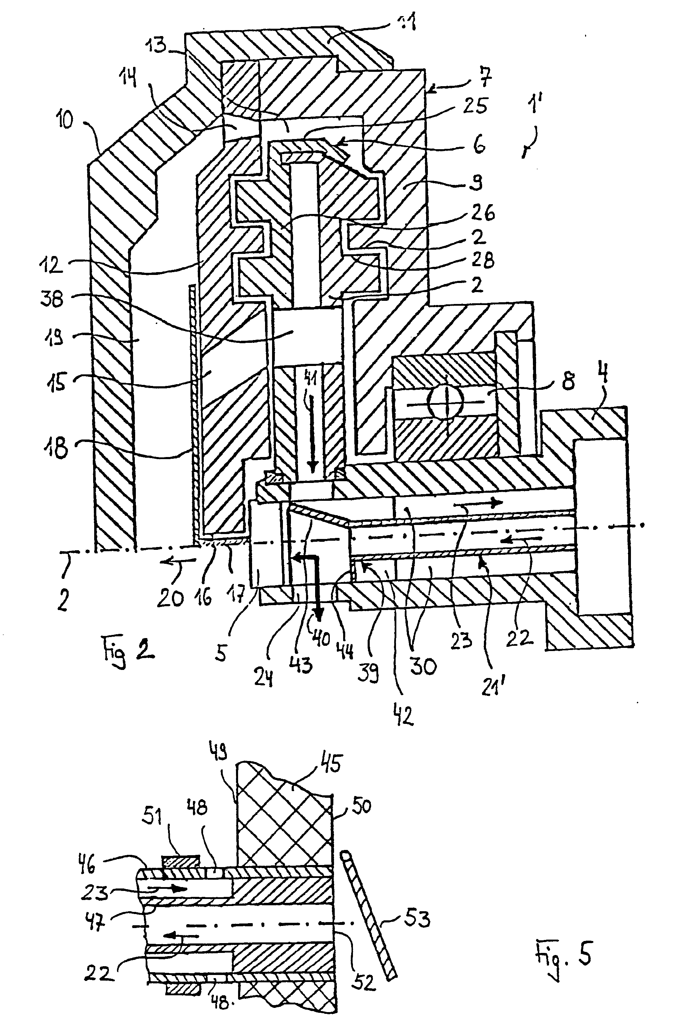

Fig. 5                    zeigt schematisch einen Querschnitt durch ein Pumpenrad einer Kühlflüssigkeitspumpe gemäß Fig. 4.

Die Querschnittsdarstellung der Fig. 1 beschränkt sich aus Gründen der Übersichtlichkeit auf die Darstellung einer oberen Hälfte einer Flüssigkeitskupplung 1, da diese bezüglich einer Rotationsachse 2 symmetrisch ausgebildet ist. Die Flüssigkeitskupplung 1 weist als treibende Welle eine Hohlwelle 3 auf, die an ihrem einen Ende mit einem Anschlußstück 4 zur Herstellung einer Rohr- oder Schlauchverbindung mit einem Kühlhwasserkreislauf eines Motors (nicht dargestellt) versehen ist. Auf diese Weise gelangt Kühlflüssigkeit aus dem Motor über die Hohlwelle 3 bis zu einem Temperaturregler 5, der in dem hier dargestellten Beispiel in einem zylinderförmigen Gehäuse angeordnet ist, welches das freie Ende der Hohlwelle 3 dicht abschließt.

Die Hohlwelle 3 ist drehfest mit einem Pumpenrad 6 verbunden. Ferner trägt die Hohlwelle 3 über ein Wälzlager 8 den angetriebenen Teil der Flüssigkeitskupplung 1, welche aus dem Turbinenrad 7 besteht. Dieses ist aus zwei runden Halbschalen 9, 10 zusammengesetzt, die an ihrem Außenumfang über eine Muffe 11 miteinander dicht verbunden sind. Die beiden Halbschalen 9, 10 bilden somit das Gehäuse der Flüssigkeitskupplung 1. Zwischen den beiden Halbschalen 9, 10 ist ferner ein Teller 12 angeordnet, dessen Außenumfang in der Verbindungsstelle der beiden Halbschalen 9, 10 eingepreßt ist.

Der Teller 12 und die eine Halbschale 9 schließen das Pumpenrad 6 ein und bilden einen Pumpenraum 13. Zur Herstellung eines geschlossenen Betriebsmittelkreislaufs ist der Teller 12 entlang seines Außenumfangs mit Austrittsöffnungen 14 versehen. Ferner weist er Eintrittsöffnungen 15 auf, die entlang eines Kreises auf der Tellerfläche verteilt sind. Die Verbindung zwischen den Austrittsöffnungen 14 und den Eintrittsöffnungen 15 wird durch einen Hohlraum 19 hergestellt, der zwischen dem Teller 12 und der anderen Halbschale 10 verläuft.

Sowohl der Teller 12 als auch die andere Halbschale 10 umgreifen das freie Ende der Hohlwelle 3. Während die andere Halbschale 10 die Funktion eines Deckels für die Flüssigkeitskupplung 1 einnimmt, ist der Teller 12 mit einer zentrischen Öffnung 16 versehen, so daß ein Durchtritt für einen Stößel 17 geschaffen wird, welcher vom Temperaturregler 5 angesteuert wird. Am freien Ende des Stößels 17 ist eine Ventilscheibe 18 angeordnet, die im Hohlraum 19 die Eintrittsöffnungen 15 beaufschlagt. Die Fig. 1 zeigt den geschlossenen Zustand dieses Ventils, bei welchem sich die Ventilscheibe 18 als Verschluß- oder Drosselstück auf einem entsprechenden Sitz des Tellers 12 befindet und die Eintrittsöffnungen verschließt.

Im Betriebszustand der Flüssigkeitskupplung rotiert das Pumpenrad, so daß die Betriebsflüssigkeit (nicht dargestellt) im Pumpenraum 13 von innen nach außen und über die Austrittsöffnungen 14 in den Hohlraum 19 gepumpt wird. Durch die Adhäsionskräfte der Betriebsflüssigkeit wird ein Drehmoment vom Pumpenrad 6 auf das Turbinenrad 7 übertragen.

Bei geöffnetem Ventil, d.b. wenn die Ventilscheibe 18 in Pfeilrichtung 20 einen Ventilhub ausgeführt hat, wird durch den Drehzahlunterschied zwischen dem Pumpenrad 6 und dem Turbinenrad 7, der auch als Schlupf bezeichnet werden kann, der Flüssigkeitsumlauf aufrechterhalten. Abbängig von der Hubstellung der Ventilscheibe 18 erfolgt eine Stromregelung für den Rückfluß der Betriebsflüssigkeit in den Pumpenraum 13. Durch Verändern der Füllung erfolgt hierbei eine Schlupfregelung zwischen dem Pumpenrad 6 und dem Turbinenrad 7. Das maximale Drehmoment wird übertragen, wenn die Ventilscheibe 18 die Eintrittsöffnungen 15 unbeschränkt freigibt. Sitzt dagegen die Scheibe 18 auf den Eintrittsöffnungen 15, so ist der Rückfluß der Betriebsflüssigkeit vollständig unterbrochen, der Pumpenraum 13 ist leer und somit wird kein Drehmoment übertragen. Die Hubbewegung der Ventilscheibe 18 wird vom Temperaturregler 5 in Abhängigkeit von der Temperatur der Kühlflüssigkeit in der Hohlwelle 3 geregelt. Mit steigender Temperatur wird das Ventil kontinuierlich geöffnet und mit sinkender Temperatur kontinuierlich geschlossen.

Um eine gute Zirkulation der Kühlflüssigkeit in der Hohlwelle 3 zu ermöglichen, die für einen schnellen Regelungsvorgang zweckmäßig ist, ist in die Hohlwelle 3 ein Rohrstück 21 eingesetzt, welches über radial ausgerichtete Abstandshalter (Fig. 2) koaxial in der Hohlwelle 3 gehalten ist. Durch das Rohrstück 21 kann Kühlflüssigkeit gemäß Pfeil 22 bis zum Temperaturregler 5 fließen. Der Rücklauf erfolgt gemäß Pfeil 23 im verbleibenden Ringraum zwischen den Abstandshaltern. Selbstverständlich können die Fließrichtungen auch umgekehrt sein.

Zur Kühlung der Flüssigkeitskupplung 1 ist das Pumpenrad 6 als Hohlkörper zur Aufnahme von Kühlflüssigkeit ausgebildet. Der Hohlraum 19 des Pumpenrades 6 steht über radiale Öffnungen 24 in der Hohlwelle 3 in verbindung mit deren Innenraum, so daß die dort strömende Kühlflüssigkeit auch gemäß Pfeilen 35 im Pumpenrad 6 zirkulieren kann.

Wie die Fig. 1 veranschaulicht, besteht das pumpenrad 6 zu diesem Zweck aus zwei an ihrem Außenumfang über eine Muffe 25 verbundenen Halbschalen 26, 27.

Damit eventuell auftretendes Achs- oder Radialspiel zwischen dem Pumpenrad 6 und dem Turbinenrad 7 den Gesamtzwischenraum zwischen diesen beiden Rädern nicht beeinträchtigt, ist die wirksame Oberfläche des Pumpenrades 6 mit in Umfangsrichtung verlaufenden Einkerbungen 28 versehen, in welche entsprechende Gegenstücke 29 auf der einen Halbschale 9 und dem Teller 12 des Turbinenrades 7 eingreifen.

Gemäß Fig. 1 weisen die Einkerbungen 28 und die Gegenstücke 29 einen dreieckigen Querschnitt auf. In Fig. 2 ist ein Beispiel für einen rechteckigen Querschnitt für die Einkerbungen 28 und ihre Gegenstücke 29 veranschaulicht.

Aus Fig. 2 ist weiter ersichtlich, daß das Pumpenrad 6 mit in Achsrichtung verlaufenden Durchtrittsöffnungen 38 versehen ist, welche die Verteilung der zurückströmenden Betriebsflüssigkeit im Pumpenraum 13 unterstützen. Die Durchtrittsöffnungen 38 sind in Umfangsrichtung über das Pumpenrad 6 verteilt. Sie liegen in Fortsetzung der Eintrittsöffnungen 15, so daß die Betriebsflüssigkeit in kurzer Zeit auf beide Seiten des Pumpenrades 6 gelangen kann.

Eine weitere Einzelheit, in welcher sich die Flüssigkeitskupplung 1' gemäß Fig. 2 von der Flüssigkeitskupplung 1 gemäß Fig. 1 unterscheidet, besteht in der Ausbildung des Rohrstückes 21. Das Rohrstück weist an seinem freien Ende im Bereich der Hohlwellen-Öffnungen 24 einen Verteiler 39 auf, welcher dazu dient, die einströmende Kühlflüssigkeit gemäß Doppelpfeil 40 an den Temperaturregler 5 und über die Hohlwellen-Öffnungen 24 in das Pumpenrad 6 zu leiten, ohne daß sich dieser Flüssigkeitsstrom mit der gemäß Pfeil 41 aus dem Pumpenrad 6 zurückfließenden Kühlflüssigkeit vermischt. Der Verteiler 39 dient ferner dazu, die zurückfließende Kühlflüssigkeit über einen ununterbrochenen Ringraum 42 auf die Kanäle zu verteilen, die im übrigen Ringraum von Leitflächen 30 gebildet werden.

Der Verteiler 39 besteht in dem hier gezeigten Beispiel somit aus einer trichterförmigen Erweiterung an der freien Austrittsöffnung des Rohrstücks 21, welche den Temperaturregler 5 gegen einen Teil der Hohlwellen-Öffnungen 24 abschirmt. Des weiteren besteht der Verteiler 39 aus einem Abzweig 44, welcher die Verbindung zu den übrigen Hohlwellen-Öffnungen 24 herstellt. Hinter dem Abzweig 44 befindet sich der Ringraum 42, der dadurch gebildet wird, daß die Wände 30 in Achsrichtung entsprechend zurückversetzt sind.

Fig. 3 zeigt einen Querschnitt durch die Hohlwelle 3 und das eingesetzte Rohrstück mit den als Abstandshaltern dienenden Wänden 30. Die Figur veranschaulicht, daß die Hohlwelle 3 durch das Rohrstück und die Wände 30 in mehrere Kanäle für die Kühlflüssigkeit unterteilt ist, so daß die Kühlflüssigkeit zirkulieren kann.

In Fig. 4 ist schematisch eine temperaturgeregelte Lüfteranordnung für einen Verbrennungsmotor mit einem Motorblock 36 in einem Kraftfahrzeug dargestellt. Ein Riemenantrieb 31 beaufschlagt eine Antriebsscheibe 32 auf der Hohlwelle 3, welche über die Flüssigkeitskupplung 1 ein Lüfterrad 33 antreibt. Mit einer Leitung 34 wird Kühlflüssigkeit aus dem Kühlflüssigkeitskreislauf 37 des Motors in die Flüssigkeitskupplung geleitet und in der vorstehend beschriebenen Weise eine temperaturabhängige Schlupfregelung bzw. Drehzahlregelung durchgeführt. In dem hier dargestellten Beispiel besteht die Leitung 34 aus einer weiteren Hohlwelle, auf welcher ein Pumpenrad 45 einer Kühlflüssigkeitspumpe sitzt. Die weitere Hohlwelle dient hierbei auch zum Antreiben des Pumpenrades 45.

Die Figur 5 veranschaulicht einige Einzelheiten im Zusammenhang mit dem Pumpenrad 45. Das Pumpenrad 45 sitzt auf der weiteren Hohlwelle 46, die mit einem rohrstückförmigen Einsatz 47 versehen ist. Der Einsatz 47 bildet entsprechend dem Rohrstück 21 in der treibenden Welle der Flüssigkeitskupplung 1 einen Ringraum, welcher über Austritte 48, die über den Umfang der weiteren Hohlwelle 46 verteilt sind, an der Saugseite 49 des Pumpenrades 45 münden. Auf diese Weise wird gemäß Pfeil 23 Kühlflüssigkeit aus der weiteren Hohlwelle 46 und somit aus der Flüssigkeitskupplung 1 abgesaugt. Eine Drosselung dieses Flüssigkeitsstroms kann in dem hier dargestellten Beispiel über einen Ring 51 erfolgen, der über die Austritte 48 geschoben wird. Grundsätzlich können die Austritte 48 auch in das Pumpenrad 45 integriert sein.

Um Kühlflüssigkeit in die weitere Hohlwelle 46 und damit in die Flüssigkeitskupplung 1 zu pumpen, weist der Einsatz 47 ferner an der Druckseite 50 des Pumpenrades 45 einen Eintritt 52 auf. Alternativ zu Ring 51 kann die Regulierung der Kühlflüssigkeit auch über eine Drosselklappe 53 vor dem Eintritt 52 am Wellenende reguliert werden.

Der Antrieb der Pumpenräder 6, 45 der Flüssigkeitskupplung 1 und der Kühlflüssigkeitspumpe kann auch über eine gemeinsame Hohlwelle erfolgen.

## Patentansprüche

1. Lüfter-Flüssigkeitskupplung (1) für einen wassergekühlten Motor, deren treibende Welle als Hohlwelle (3) zur Verbindung mit dem Kühlflüssigkeitskreislauf (37) des Motors ausgebildet ist, und mit einer zur Kühlung der Flüssigkeitskupplung (1) dienenden Kühlvorrichtung, welche über radiale Hohlwellenöffnungen (24) zum Austausch von Kühlflüssigkeit mit dem Hohlwellen-Inneren verbunden ist, dadurch **gekennzeichnet**, daß das Pumpenrad (6) als Kühlkörper ausgebildet ist, indem es zumindest teilweise als Hohlkörper ausgeformt ist, und daß der Innenraum des Pumpenrades (6) mit den Hohlwellenöffnungen (24) verbunden ist.

2. Flussigkeitskupplung nach Anspruch 1, dadurch **gekennzeichnet**, daß das Pumpenrad (6) aus zwei Halbschalen (26, 27) unter Bildung des Holraums zusammengefügt ist.

3. Flüssigkeitskupplung nach Anspruch 2, dadurch **gekennzeichnet**, daß die beiden Halbschalen (26, 27) jeweils als Blechteil ausgebildet sind.

4. Flüssigkeitskupplung nach einem der vorhergehenden Ansprüche, dadurch **gekennzeichnet**, daß die Hohlwelle (3) mit mindestens zwei axialen Führungskanälen für die Kühlflüssigkeit versehen ist, und daß die Führungskanäle durch ein in die Hohlwelle (3) eingesetztes Rohrstück (21) mit radialen Abstandshaltern gebildet werden.

5. Flüssigkeitskupplung nach Anspruch 4, dadurch **gekennzeichnet**, daß die Abstandshalter als in Achsrichtung geschlossene Leitflächen (30) zur Bildung von axialen Kanälen in der Hohlwelle (3) ausgebildet sind.

6. Flüssigkeitskupplung nach einem der vorhergehenden Ansprüche, dadurch **gekennzeichnet**, daß die Hohlwelle (3) über ihren Umfang verteilt Hohlwellenöffnungen (24) zur Verbindung mit dem Hohlraum des Pumpenrades (6) aufweist, und daß das Rohrstück (21) endseitig mit einem Verteiler (39) zur Trennung von hin- und rückfließender Kühlflüssigkeit versehen ist.

7. Flüssigkeitskupplung nach Anspruch 6, dadurch **gekennzeichnet**, daß im Bereich der Hohlwellenöffnungen ein im wesentlichen über den ganzen Umfang ununterbrochener, vom Rohrstück (21) gebildeter Ringraum (42) vorhanden ist.

8. Flüssigkeitskupplung nach einem der vorhergehenden Ansprüche, dadurch **gekennzeichnet**, daß das Pumpenrad (6) mit axial verlaufenden Durchtrittsöffnungen (38) versehen ist.

9. Flüssigkeitskupplung nach Anspruch 8, dadurch **gekennzeichnet**, daß die Durchtrittsöffnungen (38) im Anschluß an Eintrittsöffnungen (15) angeordnet sind.

10. Flüssigkeitskupplung nach einem der vorhergehenden Ansprüche, dadurch **gekennzeichnet**, daß die einander zugekehrten Oberflächen des Pumpen- und Turbinenrades (6, 7) mit in Umfangsrichtung verlaufenden Einkerbungen (28) und entsprechenden Gegenstücken (29) versehen sind, die einen dreieckförmigen Querschnitt aufweisen.

11. Flüssigkeitskupplung nach einem der vorhergehenden Ansprüche mit einer mit der treibenden Hohlwelle (3) verbundenen weiteren Hohlwelle (46), die als Antriebswelle für ein Pumpenrad (45) einer Kühlflüssigkeitspumpe im Kühlflüssigkeitskreislauf (37) des Motors ausgebildet ist, wobei die weitere Hohlwelle (46) mindestens zwei in axialer Richtung verlaufende Kanäle aufweist, von denen der eine eine Öffnung auf der Saugseite (49) und der andere eine Öffnung auf der Druckseite (50) des Pumpenrades (45) aufweist, dadurch **gekennzeichnet**, daß die weitere Hohlwelle (46) mit mindestens einer von außen betätigbaren Drossel versehen ist.

12. Flüssigkeitskupplung nach Anspruch 11, dadurch **gekennzeichnet**, daß die Drossel als Drosselklappe (53) ausgebildet ist, die vor einer am Wellenende angeordneten und in axialer Richtung ausgerichteten Öffnung angeordnet ist.

13. Flüssigkeitskupplung nach Anspruch 11 oder 12, dadurch **gekennzeichent**, daß die Drossel als Schieber auf der weiteren Hohlwelle (46) für eine radial verlaufende Öffnung angeordnet ist.

## Claims

1. A fan fluid coupling (1) for a water-cooled motor, whose driving shaft is constructed as a hollow shaft (3) for connection to the coolant circuit (37) of the motor and with a cooling device for cooling the fluid coupling (1) connected by means of radial hollow shaft openings (24) for the interchange of coolant with the hollow shaft interior, **characterized** in that the pump impeller (6) is constructed as a cooling body in that it is at least partly constructed as a hollow body wherein that the interior of the pump impeller (6) is connected to the hollow shaft openings (24).

2. A fluid coupling according to claim 1, **characterized** in that the pump impeller (6) is assembled from two half-shells (26, 27) accompanied by the formation of a cavity.

3. A fluid coupling according to claim 2, **characterized** in that the two half-shells (26, 27) are in each case constructed as a sheet metal part.

4. A fluid coupling according to any of the preceeding claims, **characterized** in that the hollow shaft (3) is provided with at least two axial guide channels for the coolant and the guide channels are formed by a pipe length (21) inserted in the hollow shaft (3) and provided with radial spacers.

5. A fluid coupling according to claim 4, **characterized** in that the spacers are constructed as axially closed control faces (30) for forming axial channels in the hollow shaft (3).

6. A fluid coupling according to any of the preceeding claims, **characterized** in that the hollow shaft (3) has circumferentially distributed hollow shaft openings (24) for connecting to the cavity of the pump impeller (6) and in that the pipe length (21) is terminally provided with a distributor (39) for separating the outward and return flowing coolant.

7. A fluid coupling according to claim 6 **characterized** in that in the vicinity of the hollow shaft openings is provided an annular space (42) formed by the pipe length (21) and which is substantially uninterrupted over its entire circumference.

8. A fluid coupling according to any of the preceeding claims, **characterized** in that the pump impeller (6) is provided with axially directed passage openings (38).

9. A fluid coupling according to claim 8, **characterized** in that the passage openings (38) are provided following onto the inlet openings (15).

10. A fluid coupling according to any of the preceeding claims, **characterized** in that the facing surfaces of the pump impeller and turbine wheel (6, 7)) are provided with circumferentially directed indentations (28) and corresponding counterparts (29) which have a triangular cross-section.

11. A fluid coupling according to any of the preceeding claims, with a further hollow shaft (46) connected to the driving hollow shaft (3) and which is constructed as a drive shaft for a pump impeller (45) of a coolant pump in the coolant circuit (37) of the motor, the further hollow shaft (46) having at least two axially directed channels, whereof one has an opening on the suction side (49) and the other an opening on the pressure side (50) of the pump impeller (45), **characterized** in that the further hollow shaft (46) is provided with at least one restrictor operable from the outside.

12. A fluid coupling according to claim 11, **characterized** in that the restrictor is constructed as a throttle valve (53) which is positioned upstream of an opening located on the shaft end and which is axially oriented.

13. A fluid coupling according to claim 11 or 12, **characterized** in that the restrictor in the form of a slide valve is positioned on the further hollow shaft (46) for a radially directed opening.


**Revendications**

1. Accouplement hydraulique (1) de ventilateur pour un moteur refroidi à l'eau, dont l'arbre d'entraînement est réalisé en arbre creux (3) à relier au circuit (37) du liquide de refroidissement du moteur, et qui est branché sur un dispositif de refroidissement servant au refroidissement de l'accouplement hydraulique, celui-ci étant relié à l'intérieur de l'arbre creux par des orifices radiaux (24) de l'arbre creux pour échanger du liquide de refroidissement, caractérisé en ce que, la roue de pompe (6) est en forme de réfrigérant, étant elle-même réalisée en corps creux au moins en partie, et que la chambre interne de la roue de pompe (6) est solidaire des orifices (24) d'arbre d'arbre creux.

2. Accouplement hydraulique selon la revendication 1, caractérisé en ce que le rotor de pompe (6) comprend deux demi-coquilles (26, 27) assemblées pour réaliser une chambre creuse.

3. Accouplement hydraulique selon la revendication 2, caractérisé en ce que les deux demi-coquilles (26, 27) sont en tôle.

4. Accouplement hydraulique selon l'une des revendications précédentes, caractérisé en ce que l'arbre creux (3) comprend au moins deux canaux axiaux d'amenée du liquide de refroidissement et que les canaux d'amenée comprennent une partie tubulaire (21) insérée dans l'arbre creux (3) avec des supports d'écartement radiaux.

5. Accouplement hydraulique selon la revendication 4, caractérisé en ce que les supports d'écartement sont des surfaces de guidage (30) destinées à réaliser des canaux axiaux dans l'arbre creux (3).

6. Accouplement hydraulique selon l'une des revendications précédentes, caractérisé en ce que l'arbre creux (3) présente des orifices d'arbre creux (24) répartis à sa périphérie pour connexion à la chambre creuse du rotor de pompe (6), et que la pièce tubulaire (21) comporte à son extrémité un répartiteur (39) pour séparer le liquide de refroidissement s'écoulant à l'aller et au retour.

7. Accouplement hydraulique selon la revendication 6, caractérisé en ce qu'au niveau des orifices d'arbre creux, il y a un espace annulaire (42) ininterrompu sur toute la périphérie formée par la pièce tubulaire (21).

8. Accouplement hydraulique selon l'une des revendications précédentes, caractérisé en ce que le rotor (6) comprend des orifices de passage radiaux (38).

9. Accouplement hydraulique selon la revendication 8, caractérisé en ce que les orifices de passage (38) coïncident avec les orifices d'entrée (15).

10. Accouplement hydraulique selon l'une des revendications précédentes, caractérisé en ce que les surfaces du rotor de pompe et du rotor de turbine (6, 7) sont munies d'entailles (28) se développant périphériquement et des contre-pièces (29) correspondantes qui ont une section triangulaire.

11. Accouplement hydraulique selon l'une des revendications précédentes, comprenant un autre arbre creux (46) relié à l'arbre creux d'entraînement (3), qu'on réalise en arbre d'entraînement pour un rotor de pompe (45) d'une pompe de liquide de refroidissement dans le circuit de liquide de refroidissement (37) du moteur, l'autre arbre creux (46) présentant au moins deux canaux s'étendant axialement, dont au moins l'un d'eux présente un orifice du côté aspiration (49) et l'autre un orifice du côté refoulement (50) du rotor de pompe (45), caractérisé en ce que l'autre arbre creux comprend au moins un clapet actionnable de l'extérieur.

12. Accouplement hydraulique selon la revendication 11, caractérisé en ce que le clapet se présente sous la forme d'une vanne papillon (53) placée devant un orifice orienté axialement devant une extrémité de l'arbre.

13. Accouplement hydraulique selon la revendication 11 ou 12, caractérisé en ce que le clapet se présente sous la forme d'un coulisseau logé dans l'autre arbre creux (46) pour obturer un orifice s'étendant radialement.

Fig. 1

Fig. 3

Fig. 4

Fig 2

Fig. 5